# EUROPEAN PATENT APPLICATION

(11) **EP 0 588 216 A1**
(43) Date of publication of application: **23.03.1994**
(21) Application number: 93114355.6
(22) Date of filing: 07.09.1993
(51) Int. Cl.: G02C 5/14

(54) **Eyeglasses having ear hooks which can be fixed at arbitrary positions relative to temples**

(30) Priority: 16.09.1992 JP 64555/92 U
(71) Applicant: CATEYE CO., LTD., Osaka-shi (JP)
(72) Inventor: Iida, Yoshiaki, Katano-shi, Osaka (JP)
(74) Representative: Prüfer, Lutz H., Dipl.-Phys.

(57) **Abstract**

Bar-shaped temples (9a) and (9b) extending backwardly are affixed on both sides of spherical lens (1). Ear hooks (11a, 11b) made of a resilient material are fitted slidably to each of temples (9a, 9b). Ear hooks (11a, 11b) are fixed to arbitrary positions relative to temples (9a, 9b) by its resilient characteristic.

## Description

The present invention relates to eyeglasses, and more particularly to eyeglasses with an improved mounting structure of an ear hook.

### Description of the Background Art

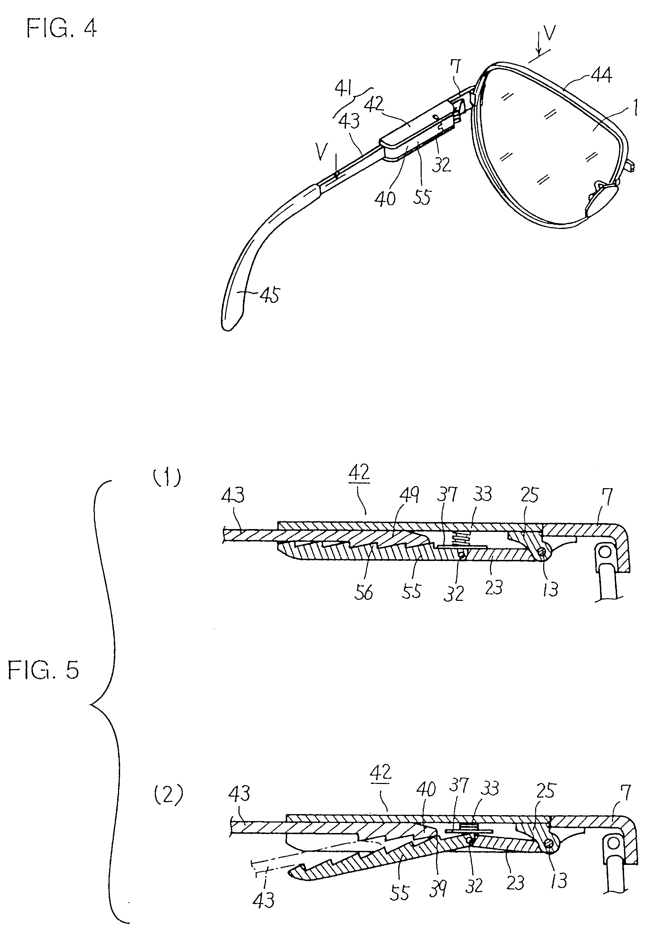

Fig. 4 is a perspective view of a temple of a conventional eyeglasses disclosed in Japanese Utility Model Publication No. 61-44188, and Fig. 5 is a cross sectional structure taken along line V-V in Fig. 4.

Referring to these figures, a support piece 25 is affixed to a support portion 7 fixed on a frame 44 of a lens 1 by a hinge portion 13. A cylindrical front temple 42 is affixed to support piece 25. A back temple 43 with an ear hook 45 affixed at its tip is detachably inserted into front temple 42. A back engaging portion 49 including a stepped protruding portion is formed at the tip of back temple 43. A stepped front engaging portion 56 corresponding to back engaging portion 49 of back temple 43 is formed at a cover 55 inside front temple 42. Cover 55 and a cover 23 affixed to hinge 13 are connected rotatably by a pivotably mounting portion 32. The inside of pivotably mounting portion 32 is pressed by a spring 33 via a support plate 37.

A conventional way for adjusting length of temples will be described below.

Normally, as shown in Fig. 5 (1), front engaging portion 56 of temple 42 presses back engaging portion 49 by enforcing power of spring 33 so as to engage with back engaging portion 49 of back temple 43. In this state, the position of back temple 43, that is, the length of the temple is fixed because front engaging portion 56 is engaged with back engaging portion 49. In order to adjust the length of the temple, the cover 55 of front temple 42 is moved to open outwardly against the enforcing power of spring 33 as shown in Fig. 5 (2), whereby the engagement of back engaging portion 49 of back temple 43 with front engaging portion 56 of front temple 42 is released as shown in the figure. Then, front engaging portion 56 is engaged with back engaging portion 49 once again after moving back temple 43 forward or backward to a suitable position and cover 55 is returned to the state shown in Fig. 5 (1). Consequently, the position of back temple 43 is fixed so that the length of the temple can be adjusted.

In the conventional temple length adjustment mechanism as described above, it is difficult to adjust the temple length finely because the front and the back engaging portions are in stepped protruding shape, and it is not advantageous costwise for its complicated structure. In addition, the direction of adjustment of the temple length is limited because the front and back temples are positioned along a straight line, and thus, three-dimensional adjustment of the position of the ear hook in accordance with a shape of a skull cannot be carried out.

An object of the present invention is to facilitate position adjustment of ear hooks in a pair of eyeglasses.

Another object of the present invention is to improve the cost efficiency of temples in a pair of eyeglasses.

In order to achieve the above objects, a pair of eyeglasses according to the present invention includes a lens, bar-shaped temples affixed to both sides of the lens, ear hooks of a resilient material engaged slidably to the temples and fixable at arbitrary positions relative to the temples, respectively.

In the pair of eyeglasses structured as above, fine adjustment of the ear hooks is facilitated because the ear hooks are fixed to arbitrary positions relative to the temples, respectively. In addition, a manufacturing cost of the pair of eyeglasses is reduced because the ear hooks can be fabricated separately from the temples.

The foregoing and other objects, features, aspects and advantages of the present invention will become more apparent from the following detailed description of the present invention when taken in conjunction with the accompanying drawings.

Fig. 1 is a perspective view showing an outside of eyeglasses according to one embodiment of the present invention.

Fig. 2 shows an outside structure of an ear hook affixed to the eyeglasses in Fig. 1.

Fig. 3 is a side view showing the eyeglasses according to one embodiment of the present invention when actually worn.

Fig. 4 is a perspective view of a conventional temple of eyeglasses.

Fig. 5 is a cross sectional view taken along line V-V of Fig. 4.

Fig. 6 shows an outside structure of an ear hook according to another embodiment of the present invention.

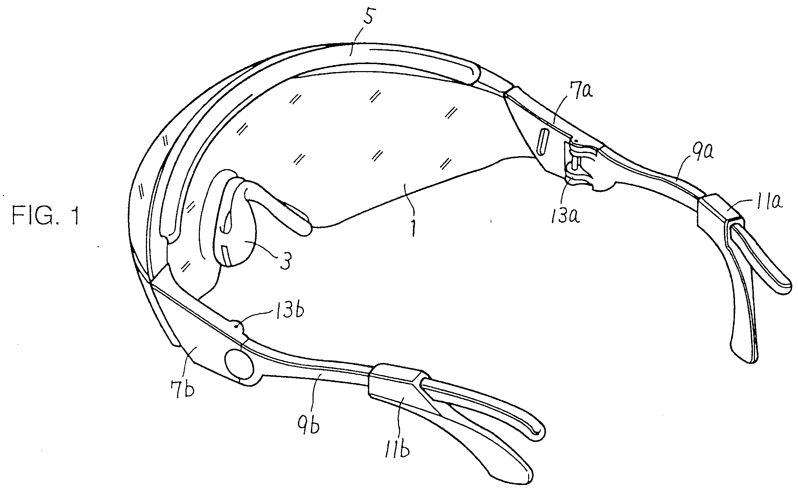

Fig. 1 is a perspective view showing an outside structure of eyeglasses according to one embodiment of the present invention.

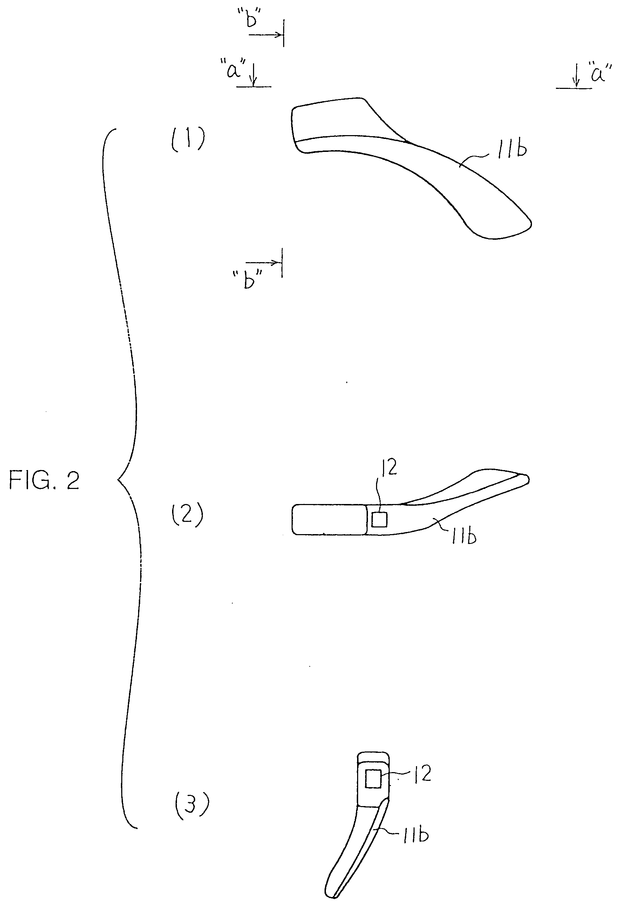

Referring to the figure, a pair of eyeglasses includes a spherical lens 1, a nose piece 3 affixed detachably at the center of lens 1, a pad 5 affixed along the upper periphery of lens 1, and support portions 7a and 7b affixed on both sides of lens 1. Bar-shaped temples 9a and 9b extend backwardly from support portions 7a and 7b, respectively along the side shape of a human skull via hinge portions 13a and 13b. Ear hooks 11a and 11b formed of thermoplastic synthetic rubber such as urethane elastomer are affixed slidably to each of temples 9a and 9b. Fig. 2 shows an outside structure of ear hook 11b in Fig. 1 in which (1) shows a side shape of ear hook 11b, (2) is a view seen in the direction of arrows "a" of (1), and (3) is a view seen along arrows "b" of (1).

As shown in Fig. 2, an opening with a square cross-section 12 is provided in ear hook 11b. Opening 12 is sized such that bar-shaped temple 9b penetrates therethrough, and ear hook 11b can slide back and forth by a certain force to arbitrary position at which its fixing force to temple 9b is exerted. Thus, the size of opening 12 is determined according to the size of the temple and a resilient characteristic due to the resilient material of the ear hooks.

Fig. 2 represents a structure of a left ear hook, but, it is not limited to this embodiment, and its shape can otherwise be designed.

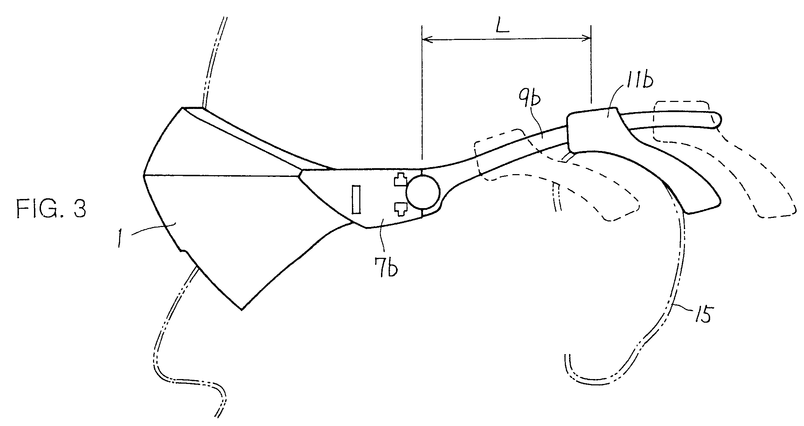

Fig. 3 is a side view of the eyeglasses shown in Fig. 1 when being actually worn by a person.

As shown in Fig. 1, temple 9b is finished in a three-dimensional curve in accordance with a shape of a human skull, and ear hook 11b is adjusted to a suitable position relative to distance L determined by a position of a wearer's ear 15. As shown in the dotted line in the figure, ear hook 11b can be fixed by adjusting to an arbitrary position forward or backward of the temple.

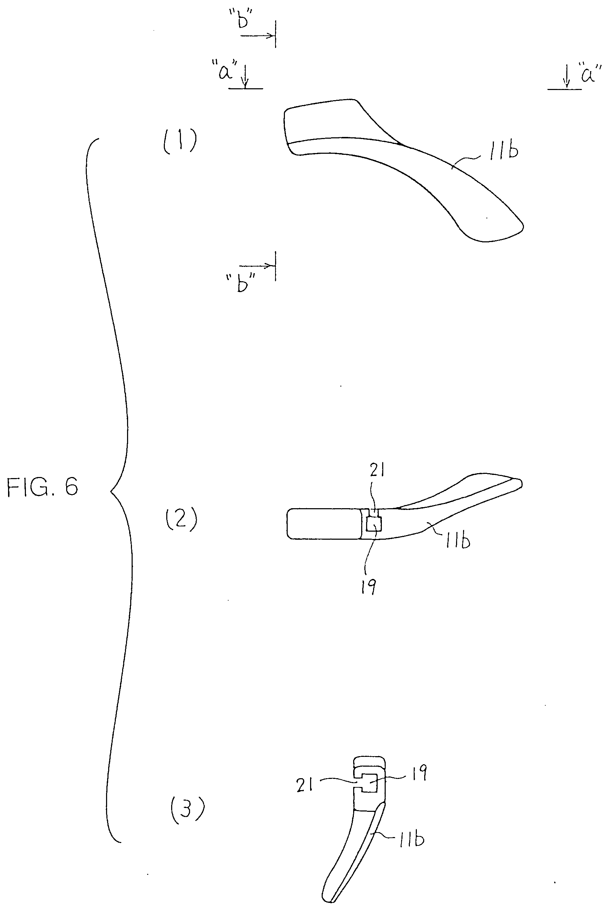

Although opening 12 having the temple penetrating therethrough is provided in the ear hook in the above embodiment, a trench 19 having a configaration as shown in Fig. 6 can be provided instead of the opening, and its open portion 21 can be widened for fitting the temple.

Eyeglasses for use in sports have been described as an example in the above embodiment, but the present invention can also apply to eyeglasses for use in everyday life.

In addition, synthetic rubber such as urethane elastomer is used as a material of the ear hook in the above embodiment: however, other materials including resilient materials having a suitable resilient characteristic can also be used.

As described above, the present invention eliminates need for a complicated adjustment mechanism and improves the cost efficiency because the ear hooks move slidably relative to the temple and can be fixed at arbitrary positions. Also, fine adjustment in accordance with the shape of the human skull who is wearing eyeglasses is facilitated because the ear hooks can be fixed at arbitrary positions.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A pair of eyeglasses, comprising:
a lens (1);
temples (9a, 9b) affixed to both sides of said lens and being bar-shaped; and
ear hooks (11a, 11b) made of a resilient material, fitted slidably to said temples, and fixable at arbitrary positions relative to said temples, respectively.

2. A pair of eyeglasses, comprising:
a lens (1);
temples (9a, 9b) affixed to both sides of said lens and being bar-shaped; and
ear hooks (11a, 11b) made of a resilient material, fitted detachably to said temples, and fixable at arbitrary positions relative to said temples, respectively.

3. The pair of eyeglasses according to claim 1 or 2, wherein an opening (12) corresponding to a cross section of each of said temples is provided in each of said ear hooks.

4. The pair of eyeglasses according to one of claims 1 to 3, wherein a trench (19) corresponding to a cross section of each of said temples is provided in each of said ear hooks, and each of said ear hooks is affixed to each of said temples by widening a width of an open portion (21) of said trench.

5. The pair of eyeglasses according to one of claims 1 to 4, wherein said ear hooks are made of synthetic rubber of polyurethane elastomer.

6. The pair of eyeglasses according to one of claims 1 to 5, wherein said pair of eyeglasses includes eyeglasses for use in sports.

7. An ear hook affixed to a temple of eyeglasses, comprising:
a body (11a, 11b) having a space (12, 19) corresponding to a cross section of said temple and made of a resilient material; and
a support body (11a, 11b) connected integrally with said body and having a shape corresponding to a shape of an ear.

8. The ear hook according to claim 7, wherein said space includes an opening (12) provided in said body.

9. The ear hook according to claim 7, wherein said space portion includes a trench (19) provided in said body.

10. The ear hook according to one of claims 1 to 9, wherein said temple has a rectangular cross section.
